# EUROPEAN PATENT APPLICATION

(11) **EP 1 111 528 A2**
(43) Date of publication of application: **27.06.2001**
(21) Application number: 00311001.2
(22) Date of filing: 08.12.2000
(51) Int. Cl.: G06F 17/60

(54) **Electronic commerce system**

(30) Priority: 22.12.1999 GB 9930408
(71) Applicant: NOKIA MOBILE PHONES LTD., 02150 Espoo (FI)
(72) Inventor: Maenpaa, Jari, 85586 Poing (DE); Vaha-Sipila, Antti, 33100 Tampere (FI)
(74) Representative: Jones, Kendra Louise

(57) **Abstract**

The present invention resides in a system for electronic trading wherein
a customer reserves a quota of tokens from an issuer which tokens are stored in the customer's mobile telephone,
the customer activates the tokens so that they can be used for buying goods or services from a vendor,
the customer selects between spending the tokens, or delegating the tokens to a delegate so that the delegate can spend the tokens with a vendor.

The vendor will present the tokens to the issuer who will redeem the tokens for their monetary value. The issuer will bill the customer based on the tokens spent. The billing can be done for example in a monthly bill.

The vendor may not learn who the delegates are, and when the delegates are spending tokens, they do so effectively as agents of the customer.

## Description

The present invention relates to a system, method and apparatus of carrying out transactions using a portable radio communication device such as a mobile phone operating in a radio communication network. Accordingly, the present invention relates also to the field of electronic commerce known as e-commerce.

Electronic commerce (e-commerce) is a fast developing area of technology and the term refers broadly to three application areas:
(1) making products and services available for ordering through an electronic carrier such as Internet shopping,
(2) taking care of transactions through or by electronic means such as smart-card or electronic purse,
(3) delivering products/services by an electronic carrier.
Thus, e-commerce is not limited to settlement (value transfer) alone but covers the complete trading procedure including ordering, negotiations, payment and delivering.

In general, any electronic payment scheme requires backing from existing financial institutions and also support of vendors/merchants. Furthermore, in practical terms, for such a scheme to work, it should advantageously be easy to implement within existing frameworks, provide some added value to the vendor (in terms of benefits over and above using conventional money or credit/loyalty cards), have minimal setting up and running costs, and from the outset have a large user base.

Against this background the present invention resides in a system wherein
a customer reserves a quota of tokens from an issuer which tokens are stored in the customer's mobile telephone,
the customer activates the tokens so that they can be used for buying goods or services from a vendor,
the customer selects between spending the tokens with the vendor, or delegating the tokens to a delegate so that the delegate can spend the tokens with the vendor.

The vendor can then present the tokens to the issuer who would redeem the tokens for their monetary value. The issuer would bill the customer based on the tokens spent, and the billing can be done for example in a monthly bill.

Preferred embodiments of the invention utilise one or more of the following features:
reservation of the quota of tokens by the customer requires an inter-active connection between the customer and the issuer;
validation of the tokens by the customer can be done off-line;
delegation of the tokens requires an inter-active connection between the customer and the delegate;
spending of the tokens requires an inter-active connection with the customer or delegate, and the vendor (and optionally the issuer);
redeeming of the tokens requires an inter-active connection with the vendor and the issuer.

The above inter-active connections can be put into effect by means of wireless links as well as Internet related protocols.

The present invention benefits in that it is not necessary for the tokens to have stand-alone monetary value. Furthermore, it is possible to issue the tokens so that they are valid only for buying a certain type of product.

A principle advantage of issuing a token for specific goods/service is that tokens can be assigned to a delegate for the prescribed purpose, which means that they cannot be spent for any other goods/service. This is particularly beneficial in an environment in which children own mobile phones, and tokens delegated to them by their parents will have associated with the token a particular use. Hence, the child would not be able to spend the token on any other non-specified goods.

The present invention could also be used with advantage by a company as part for example of a loyalty scheme in which the company issues tokens to the customer (the customer having accumulated a certain number of points/purchases with the company) for buying or exchanging against certain specific goods, either with the company or elsewhere.

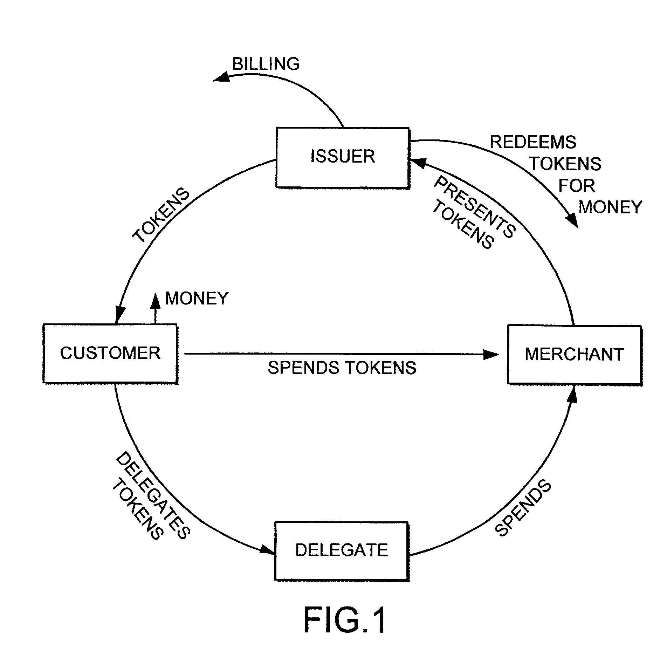

The present invention will now be described by way of example with reference to the accompanying drawing which presents a flow diagram of a system in accordance with a preferred embodiment of the present invention.

As indicated by the blocks in the accompanying drawing, the present invention involves the participation of four parties, and their roles generally are as follows:
(1) the Issuer who issues tokens to a Customer and has the capability of billing the Customer and redeeming a Vendor;
(2) the Customer who is able to delegate a token to a Delegate, as well as also able to buy goods with the token;
(3) the Delegate who is able to use Customer delegated tokens but not to delegate it himself or herself; and
(4) the Vendor/Merchant who sells the goods/services in exchange for tokens.

In some instances the Issuer and the Vendor may be the same entity. This is likely to be the case if the Vendor already has an existing billing framework in place, eg. a large department store already running a credit card scheme. If the Vendor does not have an existing billing framework then the Vendor must operate through an Issuer. The Issuer can be a financial institution or a company which has a well-functioning billing framework and is willing to offer its customers valued added services for telephones. Network operators typically have well-functioning billing systems and are thus suitable for using this kind of system.

In overview there is an initial set-up phase in which the Issuer, Customer, Merchan/Vendor establish relationships with one another. In this phase the Customer may also establish relationships with potential Delegates. Of course, for any Customer, Issuers, Merchants and Delegates may be added later.

In the preferred implementation of the present invention every party has a public/secret key pair. Key pairs consist of public and secret keys. These keys can be used for encryption and electronic signing, and decryption and checking of electronic signatures. The public and secret keys have a relationship such that something encrypted with a public key can only be decrypted with a corresponding private key; and an electronic signature generated with a private key can only be verified using a corresponding public key.

Public keys, as their name suggests, may be public in the sense that they cannot be used for decryption or generation of signatures. Therefore, if a public key is given to a third party, it does not pose a threat to the integrity of the system. On the other hand, private keys have to be kept secret, because they allow decryption and generation of electronic signatures.

A public/secret key pair cryptosystem is usually called an asymmetric cryptosystem. Some (not all) asymmetric cryptosystems can use the same keys for encryption and signature verification (or decryption and signature generation). Some systems only allow key exchange (that is, exchanging a secret key using public knowledge). Some systems only allow electronic signatures. For the purposes of the present invention the differences between different cryptosystems are set aside, and what is appropriate of an asymmetric cryptosystem in the context of the present invention is that it enables both encryption/decryption and signing/signature verification using the same key pair. It should be noted that the present invention is algorithm-independent and may use different key pairs for encryption and signing in its implementation.

The messages in a public/secret key pair can convey arbitrary satellite data. Satellite data is data that is bound to a message, and is transported with the message, but is not required for operation and its existence does not affect the operation. The messages referred to above are the messages sent and received between a first party and a second party and are not directly related to the public/secret key pair. The encrypted messages can, apart from the actual message data, convey other data. In other words there is payload data in the message and other satellite data. The other satellite data can be utilised or left unutilised/unnoticed.

In this example, the ownership of a secret key identifies the entity (party). If a secret key is only known by a single entity (eg. person), only that entity can decrypt messages directed to that entity.

A third party may issue a certificate, which is a construct that (in its simplest form) binds together the public key of the entity, identifying information of the entity and a signature of a third party. If the third party is trusted in the system, the binding between the public key and the identifying information can be verified. Because public keys and private keys have a one-to-one mathematical relationship, a certificate also uniquely binds the identifying information to the corresponding private key, and subsequently to all signatures made with that private key.

To ease the implementation, it is usually necessary to add the name (or other identifying information) to the signature, so that the respective public key can be retrieved from local storage or directory, if the digital signature is to be checked. In the present invention, an exception to this is where the identity of the Delegate is to be shielded from the Vendor/lssuer, in this case the public key of the Delegate, should not contain identifying information. In practice this can be done at the Adding Delegates to Customer phase (see later), where the Customer issues the Delegate a certificate with bogus or null name.

The messages may have identification data as well. The messages can be transferred over a medium that has identifying data in the messages, such as e-mail address in e-mail headers, or a phone number in SMS messages. In addition, the messages may contain an abovementioned certificate which contains identifying data.

Where a pair of keys is created, the keys are automatically signed using the public key. Similarly, once it has been confirmed that a key belongs to a particular individual or party, it is possible to sign that party's public key indicating that it has been confirmed that it is a valid key. A certificate is related to a key, and a message in encrypted with a key.

Each message has a "not valid before-not valid after" field. This places a limit on the time period for which the message is valid.

The key pairs used in the preferred implementation of the present invention are as follows:
Is and Ip are the secret and public keys of the Issuer;
Ds and Dp are the secret and public keys of the Delegate;
Cs and Cp are the secret and public keys of the Customer;
Ms and Mp are the secret and public keys of the Merchant/Vendor.
S(A,B) denotes object A signed by B, so that the resulting object is A plus the signature over A by B.
S(A1, A2, B) denotes objects A1 and A2 signed by B, so that the resulting object contains A1, A2 and a signature over A1 and A2 by B.
S(Rp, Auth, Ss) denotes an executable transaction between a Sender(Ss) and Recipient (Rp) and involving an object (Auth).

The organisation of the preferred implementation of the present invention is as follows.

In the set-up phase, in order for a Customer to subscribe to the present invention he/she must initially be validated into the system, which in the context of the present invention is called adding a Customer for an Issuer. Referring to the drawing, a Customer 10 who subscribes to the present invention sends his public key Cp to an Issuer 20. The Issuer 20 checks the identity out of band (for example based on a SIM card authentication, Subscriber Identity Module). Out of band indicates that the checking of the identity is carried out not using the same way as the way in which the Cp was transferred. For example, the identity of the Customer (and his/her binding to Cp) has to be verified using a reliable way such as a personal visit at the Issuer's facilities.

Once the Issuer has authenticated the identity of the Customer, the Issuer issues tokens as follows:
PreToken = S(Cp, Auth, Is)

This indicates that a Preparatory Token has provisionally been issued to the Customer using his public key and has been signed by the Issuer. By issuing the PreToken, the Issuer effectively approves that "the holder of Cp (ie the Customer) is trusted (eg. has enough credit) to spend Auth (amount of money, bonus points, etc) signed Is (ie the Issuer)."

The Auth contains information that specifies how, when and for what the tokens can be used. The information about a token can include a range of parameters and specify a number of different options. The information may include data about different parameters associated with the token that specifies for instance:
- the type of product obtainable with the token,
- in what time period the token may be exchangeable for a product,
- in what retail outlets the token may be used,
- if any discounts apply.
- if the token has a particular monetary value
- if the token is one that can be delegated.
For example a token may be issued for a specific product at a specified discount rate. The token may also be able to be delegated to a Delegate. This can be authorised when the Issuer issues the token, which would be on the request of the Customer, although the token may not necessarily be able to be delegated. The token may alternatively have a monetary value in relation to a particular Vendor. This could be carried out using the WAP (Wireless Application Protocol) stack and a dedicated WAP protocol. The tokens can be transferred using, for example, WSP (Wireless Session Protocol), which is a layer in WAP stack. In practice, this could be a WAP service to which the user connects using a portable radio communication device such as a mobile phone, and then downloads the PreTokens, which are stored in the phone.

In the preferred implementation the Auth consists of any of the following:
- authorisation to buy something for a certain price (as part perhaps of a loyalty scheme),
- authorisation to use the token as money for certain services (e-cash)
A flag may be attributed to the Auth as a indication that the token can be delegated.

PreTokens can be grouped. This is a non-cryptographic operation. The Issuer can issue, for example, a hundred tokens from a denomination of, for instance, £1.00 each and the customer can group ten of these together to make a GroupToken of £10.00.
GroupToken = non-null-sequence-of (PreToken).

This means a group of tokens, one after each other. The exact data structure depends on the data structures used for tokens. Accordingly, this makes it easier to use the tokens in smaller denominations, as it is not possible to split tokens by the Customer. Tokens may be divided by getting them reissued by the Issuer.

In the set-up phase in order for a Merchant/Vendor to be set up into the system, the Merchant/Vendor has first to be introduced to the Issuer, ie validated into the system, which in the context of the present invention is called adding a Merchant for an Issuer. In accordance with the preferred embodiment, the Issuer sends its public key Ip to the Merchant, and in response the Merchant sends his public key Mp to the Issuer. Both transactions are authenticated out of band. In effect the Issuer and Merchant typically make an agreement. They exchange public keys and make sure that the public keys come from the correct source.

In the set-up phase in order for a Customer's tokens to be accepted by a Merchant he/she must initially be validated in relation to the Merchant, which in the context of the present invention is called adding a Customer for an Merchant. In accordance with the preferred embodiment, either the Customer provides the Merchant with his public key Cp with an out of band identification to the Merchant, or the Merchant can acquire S(Cp,ls) from the Issuer in either the set up phase or the spending phase, if in the spending phase an on-line connection is advantageous.

In a modified form, it is not a pre-requisite to add Customers to Merchants. The Merchant only needs a connection to a directory from which it can receive S(Cp,ls) when necessary (ie. when someone offers a token signed by a public key of a Customer Cp and the Merchant needs to verify if this Customer is validated by the Issuer). If the Merchant does not have an on-demand connection to a directory containing S(Cp,ls), the Customer needs to preregister with the Merchant.

The Customer may wish to assign certain of his/her tokens to a third party called herein a Delegate, and as a pre-requisite to such assignation there needs to be in place a relationship between the Customer and the Delegate, which in the context of the present invention is called adding a Delegate for a Customer. In the preferred embodiment, the Delegate sends its public key Dp to the Customer and the Customer checks authorisation out of band and produces S(Dp, Cs) which is sent to the Delegate. This may be carried out between respective radiotelephones of the Customer and the Delegate using a low power RF (radio frequency) connection such as that proposed in the Bluetooth standard, or an IR (infra-red) connection. In this message, the identity of the Delegate may or may not be present, depending on if the Delegate's identity can be divulged to the Vendor. Delegated tokens can be used so that the Delegate remains anonymous.

A Pre-token or GroupToken can be assigned (ie delegated) to the Delegate by a Customer.
DelegatedToken = S(PreToken/GroupToken, Dp, Cs).

This is usually done over a low-power RF (RADIO FREQUENCY) or IR (INFRA-RED) link.

A Pre-Token or a DelegatedToken represent tokens that can be spent by the Customer or the Delegate respectively.
SpentToken = S(PreToken/GroupedToken, Mp, Cs) or
SpentDelegatedToken = S(DelegatedToken, Mp, Ds).

Such transactions may be carried out through a radiotelephone using WAP protocol if buying something on-line, or low power RF (radio frequency) or IR (infra-red) if buying something at a point of sale.

In relation to any transaction with a Customer or a Delegate the Merchant would perform at least some of the following.
It checks the Auth to see whether the transaction can be completed. If the Auth is not of accepted denomination, the transaction will not succeed. Also, the Merchant checks that its own Mp is included in the token. If it is not, the Issuer will not redeem, and the transaction will not succeed. It is possible for the Merchant to accept SpentTokens and SpentDelegatedTokens for Mps other than its own. In this case, it is up to the Merchant and Issuer to reach an agreement and whether the Issuer will pay the Merchant.
Usually the Merchant will know the identity of the Customer but not the Delegate. If the token is not a delegatable token and the outer-most signature is not of the Customer, the token is invalid.
If the Merchant does not know the Delegate of a SpentDelegatedToken (eg. the Delegate's public key Dp does not have the Delegate's identifying data on it and there is no S(Dp,ls)), it can check that the outer-most signature (generated by Ds) can be verified using the public key Dp provided in the Cs-signed DelegatedToken. This way the Customer can add any chosen number of Delegates to the system and the Merchant only knows who the Customer is.
The Merchant checks the inner-most signature to see that the token is in fact backed by the Issuer and it has not been tampered with.
The Merchant can redeem the token immediately on-line or can wait for a batch job. In the latter case, the Merchant risks running into double use of the token. If a double use situation happens the Issuer can either bill the Customer extra or take other corrective measures.

Cancellation of tokens can be done simply by sending PreTokens or DelegatedTokens to the Issuer, and then deleting them. The Issuer will mark them as cancelled and possible double-use will be noticed at the Spending phase.

At any instant in time a Customer or Delegate can check the status of his/her account, both vis-à-vis the Issuer and also how many tokens he may have remaining on his mobile phone. In this regard, the mobile phone is equipped with user interfaces (suitably menu driven) which allow the user to bring up onto the display of the mobile phone information such as the amount of tokens still available and with whom and how many tokens have been spent or delegated. In this way, the user can very conveniently keep close control of his/her finances.

In order for the Merchant to obtain monetary value for the tokens it must redeem the tokens as against the Issuer. Redeeming a token can take place immediately or in a batch job, for example during the night after a business day.
RedeemedToken = S(SpentToken/SpentDelegatedToken, Ms).

Note on double use: the Customer is primarily responsible for all double use that is done using its PreTokens, even if they are spent by Delegates. Delegates effectively act as aliases for the Customer.

The Merchant sends the token to the Issuer and the Issuer adds the used token to the account of the Customer for billing. Redeeming can be done over a network connection such as WAP or over an Internet connection.

The Issuer can send the RedeemedToken to the Customer and accordingly the Customer will have a record of transactions enabling him to see how his tokens are being spent. This is particularly advantageous in monitoring how much a Delegate has spent tokens that have been delegated to him. This may be carried out using for example WAP.

This is not intended to be an anonymous system. Each and every step is auditable. The only step that is not auditable by anyone else other than the Customer is the Delegate's identity.

This way the Merchant will obtain an accurate and complete data of the buying profile of the Customer and the Issuer can selectively issue tokens which can be used by a certain Customer. However, if the Issuer keeps the identity of the Customer a secret and the Merchant acquires the private Customer key Cp from the Issuer, even the Merchant does not know the identity of the Customer.

Thus the present invention resides in a system for electronic trading in which a customer reserves a token from a token issuer, the customer activates the token in preparation for either payment for a good or assigning the token, the customer either pays a vendor for a good with the token or assigns the token to a delegate whereby the delegate pays a vendor for the goods. The present invention includes suitable hardware for the Vendor and makes use of low power RF (radio frequency) and WAP IP (internet protocol) connections for transactions.

The present invention may be embodied in other specific forms without departing from its essential attributes. Accordingly reference should be made to the appended claims and other general statements herein rather than to the foregoing specific description as indicating the scope of invention.

Furthermore, each feature disclosed in this specification (which term includes the claims) and/or shown in the drawings may be incorporated in the invention independently of other disclosed and/or illustrated features. In this regard, the invention includes any novel features or combination of features disclosed herein either explicitly or any generalisation thereof irrespective of whether or not it relates to the claimed invention or mitigates any or all of the problems addressed.

The appended abstract as filed herewith is included in the specification by reference.

## Claims

1. An electronic commerce system wherein
a customer reserves at least one token from an issuer which token is stored in the customer's portable radio communication device, the customer activates the token so that it can be used for buying goods or services from a vendor, the customer selects between spending the token with the vendor, or delegating the token to a delegate via the delegate's radio communication device such that the delegate can spend the token with the vendor.

2. A system according to claim 1 wherein the vendor presents a spent token to the Issuer who redeems the token for monetary value.

3. A system according to claim 1 or claim 2 wherein said at least one token comprises a PreToken given by,
PreToken = S(Rp, Auth, Ss)
wherein S indicates an executable event in which Rp represents the Recipient, Ss represents the Sender and Auth is indicative of the goods/service.

4. A system according to claim 3 wherein said PreToken may be grouped to provide a GroupToken given by,
GroupToken = sequence of (PreToken).

5. A system according to claim 3 or claim 4 wherein said PreToken or GroupToken may be assigned to provide a DelegatedToken given by,
DelegatedToken = S(PreToken/GroupToken, Dp, Cs),
wherein S indicates an executable event in which a PreToken or GroupToken is transferred from a Customer (Cs) to a Delegate (Dp).

6. A system according to claim 3, claim 4 or claim 5 wherein said PreToken, GroupToken or DelegatedToken is spent with a Vendor to provide a SpentToken or a SpentDelegatedToken given by,
SpentToken = S(PreToken/GroupToken, Mp, Cs),
wherein S indicates an executable event in which a PreToken or GroupToken is spent by a Customer (Cs) with a Vendor (Mp), and
SpentDelegatedToken = S(DelegatedToken, Mp, Ds),
wherein S indicates an executable event in with a DelegatedToken is spent by a Delegate (Ds) with a Vendor (Mp).

7. A system according to claim 6 wherein said vendor redeems said SpentToken or SpentDelegatedToken with the Issuer to result in a RedeemedToken given by,
RedeemedToken = S(SpentToken/SpentDelegatedToken, Ms),
wherein S indicates an executable event in which a SpentToken or SpentDelegatedToken is redeemed by a Vendor (Ms).

8. A method for electronic commerce comprising
a customer reserving at least one token from an issuer and storing said token in the customer's portable radio communication device,
the customer selecting between spending the token with the vendor, or delegating the token to a delegate by transferring said token to the delegate's portable radio communication device for storage therein.
